# EUROPEAN PATENT APPLICATION

(11) **EP 4 495 831 A1**
(43) Date of publication of application: **22.01.2025**
(21) Application number: 24188404.8
(22) Date of filing: 12.07.2024
(51) Int. Cl.: G06N 3/0455, G06N 3/0464, G06N 3/0475, G06N 3/047, G06N 3/096, G06N 20/00

(54) **ATTRIBUTION OF GENERATIVE MODEL OUTPUTS**

(30) Priority: 14.07.2023 US 202363513838 P; 22.02.2024 US 202418584733
(71) Applicant: Disney Enterprises, Inc., Burbank, CA 91521 (US)
(72) Inventor: DOGGETT, Erika Varis, Burbank, 91521 (US); ARANA, Mark, Burbank, 91521 (US); JENKINS, Sean David, Burbank, 91521 (US); TAPPAN, Charles Thurman, Burbank, 91521 (US); WEBER, Romann Matthew, Burbank, 91521 (US); WHITEHEAD, Jonathan Patrick, Burbank, 91521 (US)
(74) Representative: Korenberg, Alexander Tal

(57) **Abstract**

The present invention sets forth a technique for analyzing a generative output of a generative model. The technique includes determining a first latent representation of the generative output and a plurality of latent representations of a plurality of data samples associated with the generative model. The technique also includes computing a plurality of similarities between the first latent representation and the plurality of latent representations. In response to determining that a first similarity that is included in the plurality of similarities and computed between the first latent representation and a second latent representation included in the plurality of latent representations exceeds a threshold, the technique includes causing output to be generated that indicates a high similarity between the generative output and a first data sample that is included in the plurality of data samples and corresponds to the second latent representation.

## Description

### CROSS-REFERENCE TO RELATED APPLICATIONS

This application claims priority to U.S. Patent Application titled "ATTRIBUTION OF GENERATIVE MODEL OUTPUTS", filed on February 22, 2024, and having Serial No. 18/584,733, which claims the benefit of U.S. Provisional Application titled "ATTRIBUTION FOR GENERATIVE MODELS," filed on July 14, 2023, and having Serial No. 63/513,838. The subject matter of these applications is hereby incorporated herein by reference in its entirety.

### BACKGROUND

### Field of the Various Embodiments

Embodiments of the present disclosure relate generally to machine learning and generative models and, more specifically, to attribution of generative model outputs.

### Description of the Related Art

Generative models refer to deep neural networks and/or other types of machine learning models that are trained to generate new instances of data. For example, a generative model could be trained on a training dataset of images of cats. During training, the generative model "learns" the visual attributes of the various cats depicted in the images. These learned visual attributes could then be used by the generative model to produce new images of cats that are not found in the training dataset.

A generative model is typically trained on a large dataset of existing content, which can include copyrighted content, offensive content, and/or other types of restricted content. When the trained generative model is subsequently used to generate new samples of content, the generated samples can be identical to, resemble, and/or otherwise be similar to certain content items within the restricted content. To avoid potential issues associated with violating copyrights, content policies, and/or other issues associated with generating and/or using restricted content, these types of generated samples should be identified before the generated samples are outputted, distributed, and/or published. This typically involves attributing a given piece of generative output produced by a generative model to one or more data samples within a training dataset for the generative model.

Existing approaches to attributing generative output to training data samples typically involve training from an ensemble of generative models on coded splits of training data and performing ablation of the trained ensemble to determine the influence of a given training data sample on output samples generated by the ensemble. These existing approaches also, or instead, involve fine-tuning a pre-trained generative model towards a desired exemplar content item, so that the fine-tuned generative model generates a set of output that is computationally influenced by the exemplar. However, both types of approaches are complex and require multiple rounds of computationally intensive retraining and/or fine-tuning to establish a baseline attribution.

As the foregoing illustrates, what is needed in the art are more effective techniques for determining the contribution of content items to the output of a generative model.

### SUMMARY

One embodiment of the present invention sets forth a technique for analyzing a generative output of a generative model. The technique includes determining a first latent representation of the generative output and a plurality of latent representations of a plurality of data samples associated with the generative model. The technique also includes computing a plurality of similarities between the first latent representation and the plurality of latent representations and determining that a first similarity that is included in the plurality of similarities and computed between the first latent representation and a second latent representation included in the plurality of latent representations exceeds a threshold. In response to determining that the first similarity exceeds the threshold, the technique includes causing output to be generated that indicates a high similarity between the generative output and a first data sample that is included in the plurality of data samples and corresponds to the second latent representation.

One technical advantage of the disclosed techniques relative to the prior art is the ability to determine the extent to which individual data samples in a representative dataset have contributed to various characteristics of a generative output produced by a generative model. Consequently, the disclosed techniques can be used to determine credit, compensation, filters, and/or other types of output associated with the attribution of various characteristics of the generative output to individual data samples. Another technical advantage of the disclosed techniques is the ability to evaluate similarities between the generative output and the data samples using latent representations of the generative output and data samples. Accordingly, the disclosed techniques can be used to perform data attribution with less latency and/or resource overhead than conventional approaches that involve retraining and/or fine-tuning one or more generative models and/or other types of machine learning models. These technical advantages provide one or more technological improvements over prior art approaches.

### BRIEF DESCRIPTION OF THE DRAWINGS

So that the manner in which the above recited features of the various embodiments can be understood in detail, a more particular description of the inventive concepts, briefly summarized above, may be had by reference to various embodiments, some of which are illustrated in the appended drawings. It is to be noted, however, that the appended drawings illustrate only typical embodiments of the inventive concepts and are therefore not to be considered limiting of scope in any way, and that there are other equally effective embodiments.
Figure 1 illustrates a system configured to implement one or more aspects of various embodiments.
Figure 2 is a more detailed illustration of the processing engine and management engine of Figure 1, according to various embodiments.
Figure 3 illustrates an example computation of latent representations and similarities associated with a generative output and a set of data samples, according to various embodiments.
Figure 4 illustrates an example computation of latent representations and similarities associated with a generative output and a set of data samples, according to various embodiments.
Figure 5A illustrates an example computation of latent representations associated with a set of data samples, according to various embodiments.
Figure 5B illustrates an example computation of latent representations and similarities associated with a generative output, according to various embodiments.
Figure 6 sets forth a flow diagram of method steps for analyzing a generative output of a generative model, according to various embodiments.

### DETAILED DESCRIPTION

In the following description, numerous specific details are set forth to provide a more thorough understanding of the various embodiments. However, it will be apparent to one of skill in the art that the inventive concepts may be practiced without one or more of these specific details.

### System Overview

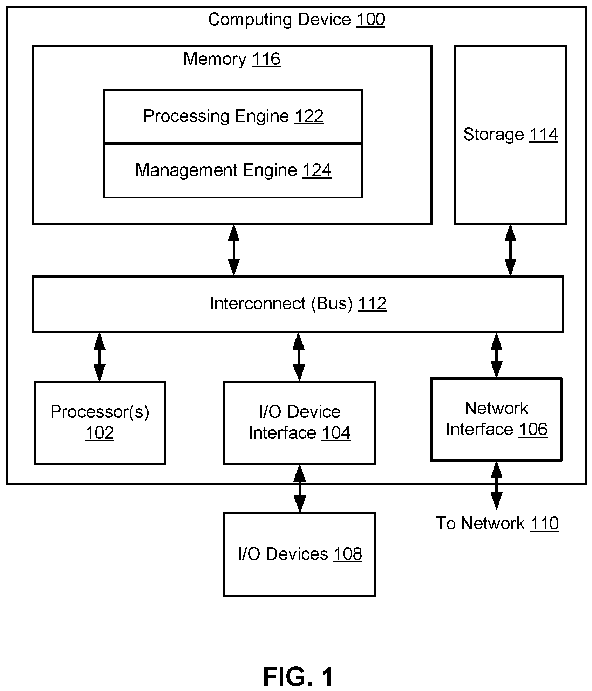

Figure 1 illustrates a computing device 100 configured to implement one or more aspects of various embodiments. In one embodiment, computing device 100 includes a desktop computer, a laptop computer, a smartphone, a personal digital assistant (PDA), a tablet computer, or any other type of computing device configured to receive input, process data, and optionally display images, and is suitable for practicing one or more embodiments. Computing device 100 is configured to run a processing engine 122 and a management engine 124 that reside in memory 116.

It is noted that the computing device described herein is illustrative and that any other technically feasible configurations fall within the scope of the present disclosure. For example, multiple instances of processing engine 122 and management engine 124 could execute on a set of nodes in a distributed and/or cloud computing system to implement the functionality of computing device 100. In another example, processing engine 122 and/or management engine 124 could execute on various sets of hardware, types of devices, or environments to adapt processing engine 122 and/or management engine 124 to different use cases or applications. In a third example, processing engine 122 and management engine 124 could execute on different computing devices and/or different sets of computing devices.

In one embodiment, computing device 100 includes, without limitation, an interconnect (bus) 112 that connects one or more processors 102, an input/output (I/O) device interface 104 coupled to one or more input/output (I/O) devices 108, memory 116, a storage 114, and a network interface 106. Processor(s) 102 may be any suitable processor implemented as a central processing unit (CPU), a graphics processing unit (GPU), an application-specific integrated circuit (ASIC), a field programmable gate array (FPGA), an artificial intelligence (Al) accelerator, any other type of processing unit, or a combination of different processing units, such as a CPU configured to operate in conjunction with a GPU. In general, processor(s) 102 may be any technically feasible hardware unit capable of processing data and/or executing software applications. Further, in the context of this disclosure, the computing elements shown in computing device 100 may correspond to a physical computing system (e.g., a system in a data center) and/or a virtual computing instance executing within a computing cloud.

I/O devices 108 include devices capable of providing input, such as a keyboard, a mouse, a touch-sensitive screen, a microphone, and so forth, as well as devices capable of providing output, such as a display device. Additionally, I/O devices 108 may include devices capable of both receiving input and providing output, such as a touchscreen, a universal serial bus (USB) port, and so forth. I/O devices 108 may be configured to receive various types of input from an end-user (e.g., a designer) of computing device 100, and to also provide various types of output to the end-user of computing device 100, such as displayed digital images or digital videos or text. In some embodiments, one or more of I/O devices 108 are configured to couple computing device 100 to a network 110.

Network 110 is any technically feasible type of communications network that allows data to be exchanged between computing device 100 and external entities or devices, such as a web server or another networked computing device. For example, network 110 may include a wide area network (WAN), a local area network (LAN), a wireless (WiFi) network, and/or the Internet, among others.

Storage 114 includes non-volatile storage for applications and data, and may include fixed or removable disk drives, flash memory devices, and CD-ROM, DVD-ROM, Blu-Ray, HD-DVD, or other magnetic, optical, or solid-state storage devices. Processing engine 122 and management engine 124 may be stored in storage 114 and loaded into memory 116 when executed.

Memory 116 includes a random-access memory (RAM) module, a flash memory unit, or any other type of memory unit or combination thereof. Processor(s) 102, I/O device interface 104, and network interface 106 are configured to read data from and write data to memory 116. Memory 116 includes various software programs that can be executed by processor(s) 102 and application data associated with said software programs, including processing engine 122 and management engine 124.

In some embodiments, processing engine 122 is configured to evaluate similarities between a generative output of a generative model and a set of data samples associated with the generative model. For example, processing engine 122 could compute one or more similarity measures between a latent representation of the generative output and latent representations of the data samples. These similarity measures could represent (but are not limited to) similarities in style, content, layout, identity, expression, composition, and/or other characteristics of the generative output and data samples. Processing engine 122 could also rank the data samples by the corresponding similarity measures, apply one or more thresholds to the similarity measures, cluster the data samples by the corresponding similarity measures, and/or otherwise use the similarity measures to characterize the absolute and/or relative similarities of the data samples to the generative output.

Management engine 124 generates additional output related to attribution of the generative output to one or more data samples based on the similarity measures computed by processing engine 122 between latent representations of the generative output and the set of data samples. Continuing with the above example, management engine 124 could attribute the style, content, layout, identity, expression, composition, and/or other characteristics of the generative output to a subset of data samples with corresponding similarity measures that indicate high similarity to the generative output. Management engine 124 could also determine attribution and/or compensation for each data sample in the identified subset of data samples; filter the generative output from subsequent output, publication, and/or distribution; and/or otherwise manage the use of the generative output based on one or more data samples to which one or more attributes of the generative output are attributed. The operation of processing engine 122 and management engine 124 is described in further detail below.

### Attribution for Generative Models

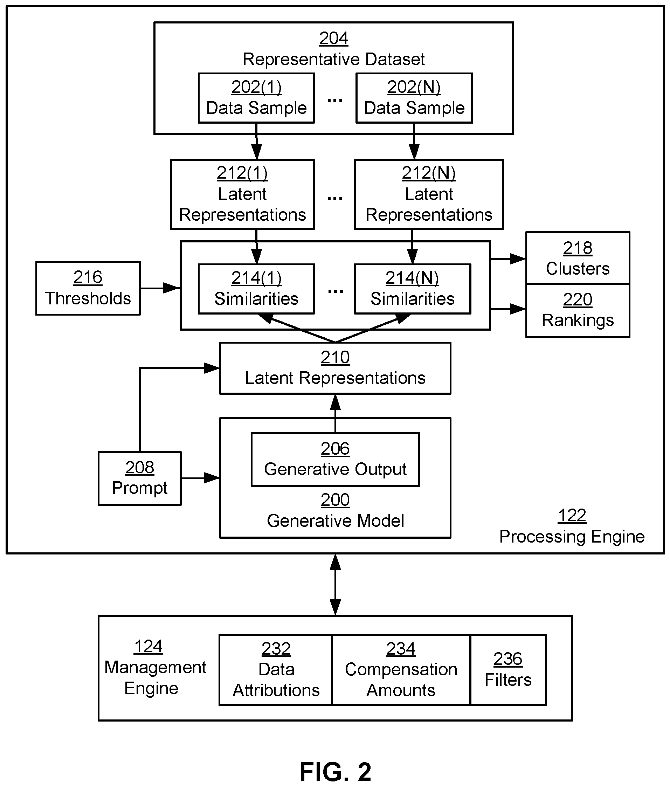

Figure 2 is a more detailed illustration of processing engine 122 and management engine 124 of Figure 1, according to various embodiments. As mentioned above, processing engine 122 and management engine 124 are configured to attribute various characteristics of a generative output 206 produced by a generative model 200 to one or more data samples 202(1)-202(N) (each of which is referred to individually herein as data sample 202) included in a representative dataset 204. For example, processing engine 122 and management engine 124 could be used to attribute the content, style, structure, layout, dimensions, composition, textures, colors, and/or other visual characteristics of an image generated by a diffusion model (and/or another type of generative model that is capable of generating images) to one or more data samples 202 included in a training dataset for the diffusion model.

Generative model 200 includes a neural network, deep learning model, and/or another type of machine learning model that is capable of generating new instances of data that are similar to a training dataset on which the machine learning model was trained. For example, generative model 200 could be trained on a dataset that includes a large number of images of cats. During training of generative model 200, generative model 200 learns patterns in the faces, fur, bodies, expressions, poses, and/or other visual characteristics of the cats in the images. These learned patterns allow generative model 200 to produce new images of cats that are not found in the training dataset.

Generative output 206 includes one or more pieces of content produced by generative model 200. For example, generative output 206 could include images, video, text, audio, point clouds, meshes, sensor data, telemetry data, gene expressions, biological data, chemical data, and/or other types of data that generative model 200 is capable of generating.

In some embodiments, processing engine 122 executes generative model 200 to produce a given piece of generative output 206. For example, processing engine 122 could input a prompt 208 in the form of text, audio, an image, video, and/or another type of content into generative model 200. Generative model 200 could include an embedding model that converts prompt 208 into a vector in a latent embedding space. The vector could be combined with a noise vector into a "pointer" vector that is used to initialize a diffusion and/or generative process. The diffusion and/or generative process iteratively refines and/or converts this "pointer" vector into an image, audio, video, additional text, and/or another type of generative output 206 that corresponds to prompt 208.

Processing engine 122 can also, or instead, determine generative output 206 using other mechanisms. For example, processing engine 122 may retrieve generative output 206 from a data store and/or another data source (e.g., after generative output 206 is produced by generative model 200 from a given prompt 208 and/or another type of input).

In some embodiments, representative dataset 204 includes a set of data samples 202 that are relevant to data attributions 232 associated with generative output 206. For example, representative dataset 204 could include images, video, text, audio, point clouds, meshes, sensor data, telemetry data, gene expressions, biological data, chemical data, and/or other types of data included in a training dataset for generative model 200. At least a portion of representative dataset 204 can also, or instead, include copyrighted content, offensive content, and/or other types of content with attributes that could or should be excluded from training data for generative model 200 and/or generative output 206 of generative model 200 (e.g., because generative output 206 that resembles this content could violate copyrights or policies related to the restricted content). At least a portion of representative dataset 204 can also, or instead, include content with "attributes of interest" that can be matched to generative output 206 (e.g., for purposes of detecting patterns in the creation of generative output 206 by generative model 200, determining the effects of a given prompt 208 on generative output 206, etc.).

As shown in Figure 2, processing engine 122 evaluates similarities 214(1)-214(N) (each of which is referred to individually herein as similarities 214) between generative output 206 of generative model 200 and individual data samples 202 in representative dataset 204. More specifically, processing engine 122 generates one or more latent representations 210 of generative output 206 and one or more latent representations 212(1)-212(N) (each of which is referred to individually herein as latent representations 212) of each data sample 202 included in representative dataset 204. For example, processing engine 122 could use one or more components of generative model 200 to convert generative output 206 and data samples 202 into corresponding sets of latent representations 210 and 212, respectively. Processing engine 122 could also, or instead, use a different machine learning model (e.g., an embedding model, pre-trained feature extractor, variational autoencoder (VAE), U-Net, distilled version of generative model 200, etc.) to generate latent representations 210 and 212 of generative output 206 and data samples 202, respectively. Each latent representation and/or portion of a latent representation can thus reflect the style, content, layout, identity, expression, composition, and/or other characteristics of the corresponding data sample 202 and/or generative output 206.

In some embodiments, processing engine 122 also uses prompt 208 to generate one or more latent representations 210 associated with generative output 206. For example, processing engine 122 could use one or more components of generative model 200, a distilled version of generative model 200, and/or a different machine learning model to convert prompt 208 into one or more latent representations 210. Processing engine 122 could combine (e.g., concatenate, sum, average, weighted average, etc.) these latent representations 210 with one or more additional latent representations 210 of generative output 206 into one or more combined latent representations 210. These combined latent representation(s) could reflect both the visual characteristics of generative output 206 and the semantic content of prompt 208.

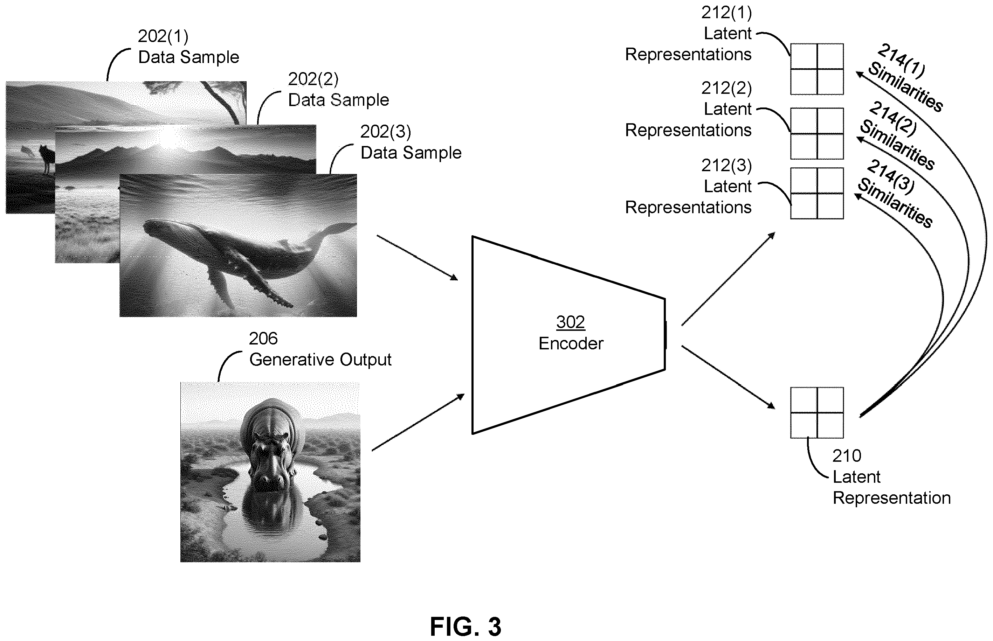

Processing engine 122 then computes similarities 214(1)-214(N) between latent representations 210 associated with generative output 206 (and optionally prompt 208) and latent representations 212 of individual data samples 202 in representative dataset 204. For example, processing engine 122 could compute a cosine similarity, Euclidean distance, and/or another measure of vector similarity between a given latent vector included in a set of latent representations 210 associated with generative output 206 and a corresponding latent vector included in a set of latent representations 212 associated with a certain data sample 202 in representative dataset 204. Processing engine 122 could also, or instead, use a different machine learning model to convert one or more latent representations 210 associated with generative output 206 and/or one or more latent representations 212 associated with a certain data sample 202 in representative dataset 204 into one or more scores. These scores could represent the similarity between generative output 206 and that data sample 202, a likelihood that generative output 206 was derived from one or more data samples 202 included in a training dataset for generative model, and/or another measure of similarity between generative output 206 and at least a portion of representative dataset 204. Processing engine 122 could also, or instead, compute different measures of similarity between different portions of a set of latent representations 210 (e.g., different regions and/or dimensions within the latent vector, a layer of a feature extractor from which a subset of the latent vector was extracted, etc.) associated with generative output 206 and corresponding portions of a set of latent representations 212 associated with that data sample 202. Processing engine 122 could also, or instead, compute one or more multidimensional similarities 214 between various dimensions associated with latent representations 210 and latent representations 212. These multidimensional similarities 214 could be computed between different portions (e.g., layers, vectors, sub-vectors, etc.) of latent representations 210 and latent representations 212, compressed versions of latent representations 210 and latent representations 212 (e.g., after a dimensionality reduction technique has been used to convert latent representations 210 and latent representations 212 into the corresponding compressed versions), and/or other versions of latent representations 210 and latent representations 212 (e.g., aggregations of multiple latent representations 210 of generative output 206 and/or multiple latent representations 212 of a given data sample 202). Determining similarities 214 between latent representations 210 of generative output 206 and latent representations 212 of data samples 202 is described in further detail below with respect to Figures 3, 4, and 5A-5B.

Processing engine 122 also determines whether each of the computed similarities 214 exceeds one or more thresholds 216. Each of thresholds 216 can represent a certain level of similarity between one or more characteristics of generative output 206 and/or one or more corresponding characteristics of a given data sample 202. Each of thresholds 216 can include a fixed value, a quantile, a value that is computed as a function of the corresponding similarities 214, and/or a value that is determined based on the level of similarity represented by that threshold. When a similarity between a first latent representation (e.g., a latent vector, a portion of a latent vector, etc.) associated with generative output 206 and a second latent representation associated with a given data sample 202 meets or exceeds a corresponding threshold, processing engine 122 can determine that a similarity between one or more characteristics of generative output 206 that correspond to the first latent representation and one or more corresponding characteristics of data sample 202 that correspond to the second latent representation is at least the level of similarity represented by that threshold. Conversely, when a similarity between a first latent representation (e.g., a latent vector, a portion of a latent vector, etc.) associated with generative output 206 and a second latent representation associated with a given data sample 202 does not meet or exceed a corresponding threshold, processing engine 122 can determine that the similarity between one or more characteristics of generative output 206 that correspond to the first latent representation and one or more corresponding characteristics of data sample 202 that correspond to the second latent representation is lower than the level of similarity represented by that threshold.

In some embodiments, processing engine 122 applies multiple thresholds 216 to similarities 214 between generative output 206 and data samples 202. These thresholds 216 can correspond to different characteristics of generative output 206 and data samples 202; different levels of similarity between generative output 206 and data samples 202 (and/or between various characteristics of generative output 206 and data samples 202); and/or different types of attribution, applications, and/or outcomes. For example, processing engine 122 could use different thresholds 216 to indicate a high level of similarity in characteristics captured in different latent representations 210 of generative output 206 and corresponding latent representations 212 of data samples 202. In another example, thresholds 216 could include a first threshold (e.g., 0.4) that represents source attribution, a second threshold (e.g., 0.75) that represents monetization, and a third threshold (e.g., 0.9) that represents copyright ownership. These thresholds could be set manually and/or based on human feedback on the level of similarity between data samples 202 and generative output 206 and/or between certain attributes of data samples 202 and corresponding attributes of generative output 206. The first, second, and thresholds could also, or instead, represent a type of prompt 208 that corresponds to "inspiration" from a certain type of content (e.g., a set of traits or attributes associated with a copyrighted character, celebrity, and/or another entity of interest), variations on copyrighted content (e.g., a prompt that identifies a copyrighted character, celebrity, and/or another entity of interest but changes one or more attributes of the entity of interest), and aliases for copyrighted content (e.g., a tagline or description that constitutes an "also known as" for a copyrighted character, celebrity, and/or another entity of interest), respectively.

Processing engine 122 also, or instead, generates one or more sets of clusters 218 of data samples 202 by the corresponding latent representations 212 and/or similarities 214. For example, processing engine 122 could use k-means clustering, hierarchical clustering, Density-Based Spatial Clustering of Applications with Noise (DBSCAN), and/or another type of clustering technique to generate clusters 218 of data samples 202 by one or more corresponding similarities 214 and/or one or more corresponding latent representations 212.

Processing engine 122 can also use clusters 218 to determine patterns and/or relationships across data samples 202 and/or between data samples 202 and generative output 206. For example, processing engine 122 could perform comparisons of latent representations 212 and/or portions of latent representations 212 associated with data samples 202 in the identified cluster(s) and the corresponding latent representations 210 and/or portions of latent representations 210 associated with generative output 206 and/or prompt 208 to identify specific characteristics (e.g., style, content, layout, shapes, colors, textures, contours, dimensions, identity, expression, composition, etc.) of these data samples 202 that are correlated with specific words and/or elements of prompt 208, that are highly similar to corresponding characteristics of generative output 206, and/or that cause these data samples 202 to be identified as highly similar (or dissimilar) to generative output 206.

In another example, processing engine 122 could determine whether or not generative model 200 was trained with a given data sample 202 and a corresponding training caption (e.g., a text-based description of the data sample) based on the amount of clustering of data samples 202 by similarities 214. When generative model 200 is trained using that data sample 202, the closer prompt 208 is to the training caption, the more pronounced similarities 214 become within clusters 218, and the greater the computed similarities 214 between that data sample 202 and generative output 206 produced by generative model 200 from prompt 208. When the model is not trained using that data sample 202, the closer prompt 208 is to the training caption, the less easily the data will cluster (e.g., because generative model 200 is likely producing generative output 206 by drawing on a relatively large set of training data samples 202 with less overall relevance to prompt 208 instead of a smaller set of training data samples 202 with high relevance to prompt 208).

In a third example, processing engine 122 could characterize data samples 202 associated with a given cluster by the corresponding latent representations 212 and/or characteristics reflected in the corresponding latent representations 212. Here, processing engine 122 could analyze these data samples 202 and/or the corresponding latent representations 212 to determine characteristics shared by these data samples 202, characteristics that differ across these data samples 202, distributions of similarities 214 between latent representations 212 of these data samples 202 and corresponding latent representations 210 of generative output 206, and/or other values associated with these data samples 202 and/or the corresponding latent representations 212. Processing engine 122 could also, or instead, aggregate latent representations 212 of these data samples 202 and/or similarities 214 between these latent representations 212 and corresponding latent representations 210 of generative output 206 into one or more "representative" latent representations 212 and/or similarities 214 for the cluster. Processing engine 122 could also, or instead, apply one or more thresholds 216 to the representative similarities and/or perform other analyses based on the representative latent representations 212 and/or similarities 214 to characterize the overall similarity of the cluster to generative output 206.

Processing engine 122 also, or instead, generates one or more rankings 220 of data samples 202 and/or clusters 218 by the corresponding latent representations 212 and/or similarities 214. For example, processing engine 122 could order data samples 202 and/or clusters 218 by individual measures of similarity with generative output 206, aggregations (e.g.. sums, averages, weighted averages, etc.) of multiple measures of similarity with generative output 206, and/or other combinations of similarities 214 computed between latent representations 210 of generative output 206 and latent representations 212 of data samples 202.

Processing engine 122 can additionally use rankings 220 to further evaluate similarities 214 between data samples 202 and generative output 206. For example, processing engine 122 could use a given ranking of data samples 202 and/or clusters 218 by similarities 214 associated with one or more characteristics (e.g., style, content, layout, shapes, colors, textures, contours, dimensions, identity, expression, composition, prompt 208, etc.) and/or one or more thresholds 216 associated with these characteristics(s) to identify subsets of data samples 202 as having different levels of similarity (e.g., highly similar, moderately similar, moderately dissimilar, highly dissimilar, etc.) to generative output 206 in these characteristic(s). Processing engine 122 could also, or instead, select a certain number of data samples 202 and/or clusters 218 in a given ranking as the highest in similarity and/or dissimilarity to generative output 206 in the corresponding characteristic(s). Processing engine 122 could also, or instead, use one or more rankings 220 to generate histograms, summary statistics, and/or other representations of the distributions of various similarities 214 across data samples 202. Processing engine 122 could also, or instead, use one or more rankings 220 of clusters 218 to identify clusters 218 that are the most similar and/or least similar to generative output 206, determine characteristics that increase or decrease the similarity of clusters 218 to generative output 206, and/or perform other types of analyses related to similarities 214 associated with clusters 218.

Management engine 124 uses the results of evaluations performed by processing engine 122 using similarities 214, thresholds 216, clusters 218, and/or rankings 220 to generate output related to similarities 214. As shown in Figure 2, this output can include data attributions 232 associated with generative output 206 and data samples 202. For example, management engine 124 could identify a subset of data samples 202 with similarities 214 that exceed one or more thresholds 216 representing high similarity to one or more corresponding characteristics of generative output 206. Management engine 124 could also, or instead, use one or more rankings 220 and/or clusters 218 to identify a certain number of data samples 202 with the highest similarities 214 in one or more characteristics to generative output 206. Management engine 124 could assign a numeric data attribution representing the relative contribution of each of these data samples 202 to the characteristic(s) of generative output 206 based on one or more corresponding similarities 214 computed for that data sample 202, one or more thresholds 216 applied to those similarities 214, one or more clusters 218 to which data sample 202 belongs, and/or the position of that data sample 202 in one or more rankings 220 of data samples by those similarities 214. This numeric data attribution could represent and/or be used to assign a proportional amount of credit for generative output 206 to a creator of the corresponding data sample 202.

The output generated by management engine 124 can also, or instead, include compensation amounts 234 (e.g., monetary compensation, non-monetary compensation, etc.) associated with data attributions 232. Continuing with the above example, management engine 124 could assign proportions of an overall compensation associated with publishing, distributing, and/or otherwise using generative output 206 to data samples 202 with positive data attributions 232 to generative output 206. Each proportion could be computed as a weighted sum and/or another aggregation of numeric data attributions 232 for a corresponding data sample 202. Within the weighted sum, each numeric data attribution could be weighted by a factor that represents the relative importance of one or more corresponding characteristics of that data sample 202 to generative output 206.

The output generated by management engine 124 can also, or instead, include filters 236 associated with data attributions 232. For example, management engine 124 could determine that one or more data samples 202 with similarities 214 that exceed one or more thresholds 216 representing high similarity with generative output 206 are included in a set of copyrighted content, offensive content, and/or another type of restricted content. Management engine 124 could also generate one or more filters 236 that block the subsequent output, distribution, and/or use of these data samples 202. One or more filters 236 could also, or instead, be used to flag the corresponding data sample(s) 202 for user review and/or additional analysis by processing engine 122, which can allow similarities 214 between these data sample(s) 202 and generative output 206 to be evaluated in a more comprehensive and/or fine-grained manner. One or more filters 236 could also, or instead, be used to modify generative output 206 and/or prompt 208 in a way that reduces similarities 214 between generative output 206 and the restricted content.

While the operation of processing engine 122 and management engine 124 has been described above with respect to generative output 206 produced by a given generative model 200, it will be appreciated that processing engine 122 and management engine 124 can be used to determine and/or manage attribution for other types of output and/or machine learning models. For example, processing engine 122 and management engine 124 could be used to determine similarities 214 between a data sample inputted into a regression model, tree-based model, neural network, support vector machine, Bayesian network, clustering technique, collaborative filtering technique, deep learning model, hierarchical model, ensemble model, and/or another type of machine learning model and a set of data samples 202 included in a training dataset used to train the machine learning model. Processing engine 122 and management engine 124 could use these similarities 214 to attribute a classification, regression, and/or another type of output generated by the machine learning model to one or more data samples 202 in the training dataset, determine values and/or patterns in latent representations 212 associated with one or more clusters 218 of data samples 202 that result in the same and/or similar classification and/or regression outputs, select a subset of data samples 202 in clusters 218 as "representative" of the training dataset and/or distribution of data used to train the machine learning model, and/or perform other tasks related to characterizing the training data and/or output of the machine learning model.

It will also be appreciated that processing engine 122 and management engine 124 can be used to perform tasks that differ from data attribution. For example, processing engine 122 and management engine 124 could use similarities 214 computed between pairs of data samples 202 to "curate" representative dataset 204 by finding "unique" data samples 202 to include in representative dataset 204 and/or filtering data samples 202 that are highly similar to a given data sample 202 and/or generative output 206 (or another type of machine learning model output). This curated representative dataset 204 could also be used to train and/or fine-tune generative model 200 to increase the rate at which parameters of generative model 200 converge and/or prevent generative model 200 from producing generative output 206 that resembles certain data samples 202. In another example, processing engine 122 and management engine 124 could be used to measure dissimilarity between a set of restricted (e.g., copyrighted, offensive, etc.) content and a set of data samples 202 in a corresponding representative dataset 204. Representative dataset 204 could then be filtered so that data samples 202 with greater than a threshold dissimilarity to the restricted content are used to train and/or fine-tune generative model 200, thereby encouraging generative model 200 to subsequently produce generative output 206 that is dissimilar to the restricted content.

Figure 3 illustrates an example computation of latent representations 210 and 212(1)-212(3) and similarities 214(1)-214(3) associated with a generative output 206 and a set of data samples 202(1)-202(3), according to various embodiments. As shown in the example of Figure 3, encoder 302 is used to convert each of three data samples 202(1), 202(2), and 202(3) into a respective set of one or more latent representations 212(1), 212(2), and 212(3). Encoder 302 is also used to convert generative output 206 into a corresponding set of one or more latent representations 210.

For example, encoder 302 could be included in a VAE that is used in a diffusion-based generative model 200 to convert between images corresponding to data samples 202(1)-202(3) and generative output 206 into latent representations 212(1)-212(3) and 210, respectively. In another example, encoder 302 could include a pretrained feature extractor, such as (but not limited to) a VGG, ResNet, Inception, MobileNet, DarkNet, AlexNet, GoogLeNet, and/or another type of deep CNN that has been trained to perform image classification, object detection, and/or other tasks related to a dataset of images. In a third example, encoder 302 could include one or more functions that transform images and/or other types of data included in data samples 202(1)-202(3) and generative output 206 into latent representations 212(1)-212(3) and 210. These latent representations 212(1)-212(3) and 210 could occupy an embedding space with a dimensionality that is equal to, higher than, or lower than the dimensionality associated with the images and/or data in data samples 202(1)-202(3) and generative output 206.

After latent representations 212(1)-212(3) and 210 are generated, three sets of similarities 214(1), 214(2), and 214(3) are computed between a set of latent representations 210 of generative output 206 and three sets of latent representations 212(1), 212(2), and 212(3) of data samples 202(1), 202(2), and 202(3). For example, similarities 214(1)-214(3) could include cosine similarities, Euclidean distances, and/or other measures of vector similarity between latent representations 210 and latent representations 212(1)-212(3). In another example, similarities 214(1)-214(3) could include multidimensional similarities that are computed between different subsets, dimensions, and/or dimensionality reductions of latent representations 210 and latent representations 212(1)-212(3). Similarities 214(1)-214(3) can then be used to determine data attributions 232, compensation amounts 234, and filters 236 associated with generative output 206, as discussed above.

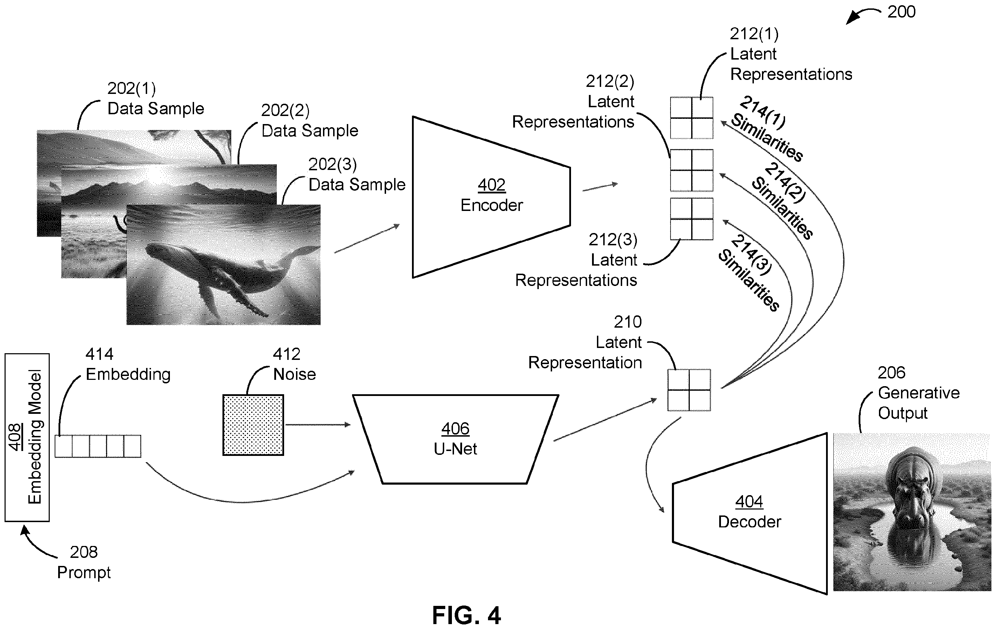

Figure 4 illustrates an example computation of latent representations 210 and 212(1)-212(3) and similarities 214(1)-214(3) associated with a generative output 206 and a set of data samples 202(1)-202(3), according to various embodiments. More specifically, Figure 4 illustrates the use of various components of a diffusion-based generative model 200 to compute latent representations 210, 212(1), 212(2), and 212(3) of generative output 206 and three data samples 202(1), 202(2), and 202(3), respectively, and similarities 214(1), 214(2), and 214(3) between latent representations 210 and latent representations 212(1), 212(2), and 212(3).

As shown in Figure 4, the diffusion-based generative model 200 includes a VAE that includes an encoder 402 and a decoder 404, a U-Net 406, and an embedding model 408 included in a diffusion-based generative model 200. Embedding model 408 is used to convert prompt 208 into an embedding 414. For example, embedding model 408 could include a text encoder, image encoder, and/or another component of a Contrastive Language-Image Pretraining (CLIP) neural network that learns a multimodal embedding space associated with images, text, and/or other types of data. These component(s) could be used to convert prompt 208 in the form of text, one or more images, and/or other types of content into a corresponding embedding 414 within the embedding space.

Embedding 414 is combined with noise 412 to generate input into U-Net 406. U-Net 406 performs iterative denoising of the input into latent representations 210. Decoder 404 is then used to convert latent representations 210 into an image-based generative output 206 in pixel space.

Encoder 402 is separately used to convert each of data samples 202(1)-202(3) into a corresponding set of latent representations 212(1)-212(3). After latent representations 212(1)-212(3) and 210 are generated, three sets of similarities 214(1), 214(2), and 214(3) can be computed between the denoised latent representations 210 of generative output 206 and three sets of noisy latent representations 212(1), 212(2), and 212(3) of data samples 202(1), 202(2), and 202(3).

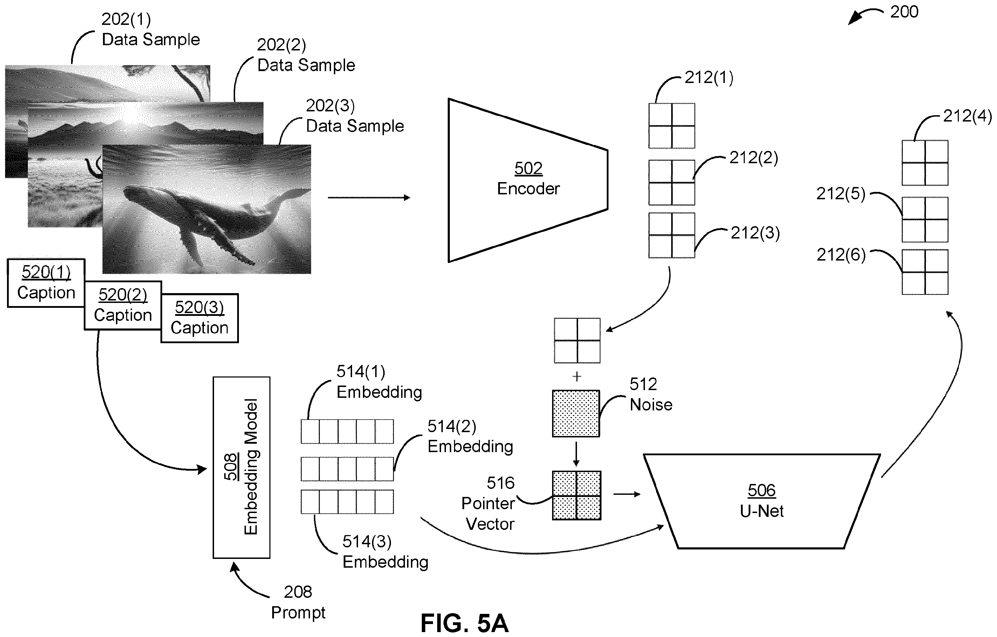

Figure 5A illustrates an example computation of latent representations 212(1)-212(6) associated with a set of data samples 202(1)-202(3), according to various embodiments. More specifically, Figure 5A illustrates the use of various components of a diffusion-based generative model 200 to compute two different types of latent representations 212(1)-212(3) and 212(4)-212(6) of three data samples 202(1)-202(3).

As shown in Figure 5A, an embedding model 508 included in generative model 200 is used to convert captions 520(1)-520(3) for data samples 202(1)-202(3) into corresponding embeddings 514(1)-514(3). For example, embedding model 508 could include a text encoder in a CLIP neural network that converts text-based captions 520(1)-520(3) with which image-based data samples 202(1)-202(3) are paired into embeddings 514(1)-514(3) in a multimodal embedding space shared by images and text.

An encoder 502 from a VAE within generative model 200 is separately used to convert each data sample 202(1)-202(3) into a corresponding set of latent representations 212(1)-212(3). Each set of latent representations 212(1)-212(3) is combined with a different set of noise 512 as input into U-Net 506.

Each embedding 514(1)-514(3) from embedding model 508 is used to guide the operation of a U-Net 506 within generative model 200 in converting a given set of input (e.g., a set of latent representations 212 and a corresponding set of noise 512) into a denoised set of latent representations 212(4)-212(6). For example, U-Net 506 could include attention layers and/or other components that use each embedding 514(1), 514(2), and 514(3) to condition and/or guide the iterative transformation of a combination of a respective set of latent representations 212(1), 212(2), 212(3) and a set of noise 512 into a denoised set of latent representations 212(4), 212(5), and 212(6). Thus, denoised latent representations 212(4), 212(5), and 212(6) include both visual attributes of data samples 202(1), 202(2), and 202(3), respectively, and semantic content from the corresponding captions 520(1), 520(2), and 520(3).

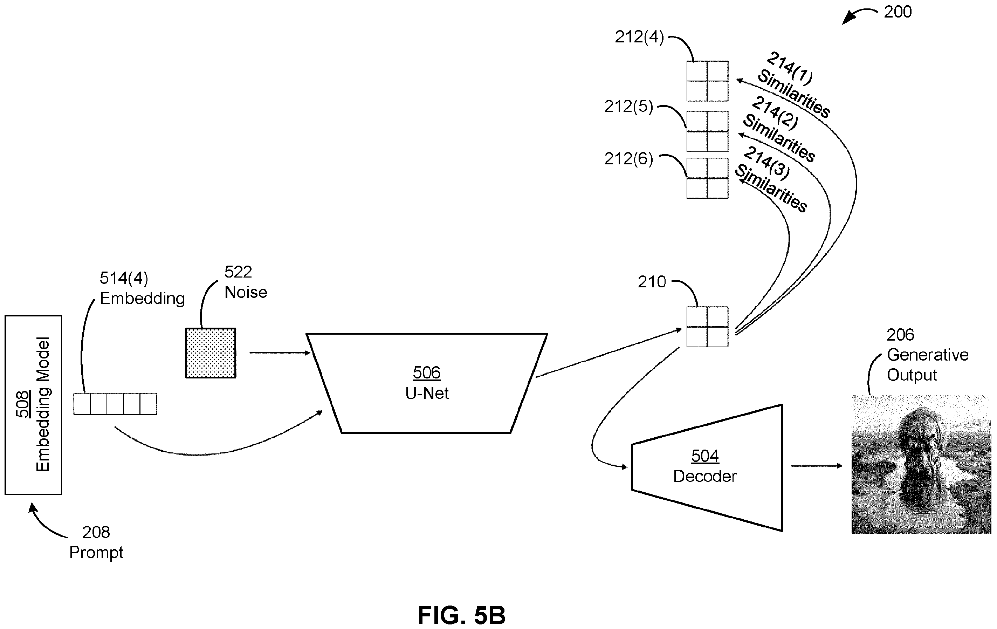

Figure 5B illustrates an example computation of latent representations 210 and similarities 214(1)-214(3) associated with a generative output 206, according to various embodiments. More specifically, Figure 5B illustrates the use of various components of the diffusion-based generative model 200 of Figure 5A to (i) convert a given prompt 208 into a corresponding generative output 206 and (ii) compute similarities 214(1)-214(3) between latent representations 210 of generative output 206 and denoised latent representations 212(4)-212(6) of data samples 202(1)-202(3) and the corresponding captions 520(1)-520(3).

As shown in Figure 5B, embedding model 508 is used to convert prompt 208 into a corresponding embedding 514(4). Embedding 514(4) is combined with noise 522 to generate input into U-Net 506, and U-Net 506 is used to convert the input into a set of denoised latent representations 210. A decoder 504 from the same VAE as encoder 502 is then used to convert latent representations 210 into an image-based generative output 206 in pixel space. After latent representations 210 are generated, three similarities 214(1), 214(2), and 214(3) can be computed between the denoised latent representations 210 of generative output 206 and the three denoised latent representations 212(4), 212(5), and 212(6) of data samples 202(1), 202(2), and 202(3).

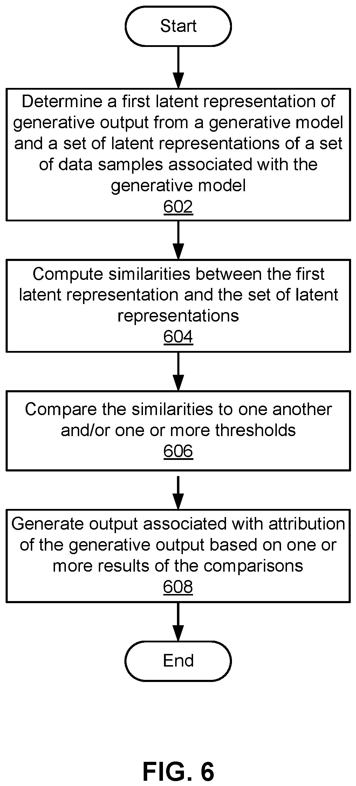

Figure 6 sets forth a flow diagram of method steps for analyzing a generative output of a generative model, according to various embodiments. Although the method steps are described in conjunction with the systems of Figures 1-2, persons skilled in the art will understand that any system configured to perform the method steps in any order falls within the scope of the present disclosure.

As shown, in step 602, processing engine 122 determines a first latent representation of generative output from a generative model and a set of latent representations of a set of data samples associated with the generative model. For example, processing engine 122 could use an encoder, decoder, U-Net, and/or other components of a generative model (or a distillation of a generative model) to generate latent representations of the generative output, a prompt associated with the generative output, and/or the data samples. In another example, processing engine 122 could use a pretrained feature extractor and/or another type of neural network to convert the generative output, prompt, and/or data samples into corresponding latent representations.

In step 604, processing engine 122 computes similarities between the first latent representation and the set of latent representations. For example, processing engine 122 could compute a cosine similarity, Euclidean distance, and/or another measure of vector similarity between the first latent representation and latent representations of the data samples. Processing engine 122 could also, or instead, compute a given similarity as a multidimensional similarity that accounts for different dimensions, layers, dimensionality reductions, and/or other subsets of the latent representations. Processing engine 122 could also, of instead, use one or more machine learning models to convert the first latent representation and each latent representation included in the set of latent representations into a corresponding similarity score.

In step 606, processing engine 122 compares the computed similarities to one another and/or to one or more thresholds. For example, processing engine 122 could retrieve one or more predetermined thresholds for a given type of latent representation and/or dynamically determine one or more thresholds based on quantiles, minimum values, maximum values, and/or other summary statistics associated with the similarities. Each threshold could represent a certain level of similarity between one or more characteristics (e.g., style, content, layout, shapes, colors, textures, contours, dimensions, identity, expression, composition, etc.) of the generative output and one or more corresponding characteristics of a data sample. The comparison could involve determining whether each computed similarity exceeds, is equal to, or is less than the corresponding threshold.

In another example, processing engine 122 could generate one or more rankings of the data samples by one or more corresponding measures of similarity to the generative output. Processing engine 122 could use a given ranking to identify a certain number of data samples with corresponding characteristics that are the most and/or least similar to those of the generative output.

In a third example, processing engine 122 could generate clusters of the data samples by similarity to the generative output and/or proximity to one another within a latent vector space occupied by the corresponding latent representations. Processing engine 122 could analyze the clusters to determine specific characteristics (e.g., style, content, layout, shapes, colors, textures, contours, dimensions, identity, expression, composition, etc.) of the data samples that are correlated with specific words and/or elements of the prompt, highly similar to corresponding characteristics of the generative output, and/or cause the data samples to be identified as highly similar (or dissimilar) to the generative output. In another example, processing engine 122 could determine whether or not the generative model was trained with a given data sample and a corresponding training caption (e.g., a text-based description of the data sample) based on the amount of clustering of the data samples by the similarities. In a third example, processing engine 122 could determine representative data samples, similarities, and/or latent representations for each cluster.

In step 608, management engine 124 generates output associated with attribution of the generative output based on one or more results of the comparisons performed in step 606. For example, management engine 124 could generate a histogram, chart, and/or another visual representation of a distribution of one or more similarities between the generative output and the data samples (or clusters of the data samples). In another example, management engine 124 could attribute various characteristics of the generative output to one or more data samples and/or clusters with corresponding similarities that exceed a threshold. Management engine 124 could also, or instead, indicate that certain characteristics of the generative output are not attributed to one or more data samples with corresponding similarities that do not exceed a threshold. In a third example, management engine 124 could compute a compensation amount for a creator and/or owner of a given data sample to which one or more characteristics of the generative output are attributed. In a fourth example, management engine 124 could generate a filter that flags the generative output for manual review and/or prevents the generative output from being outputted, published, distributed, and/or otherwise used when the generative output is determined to be similar to copyrighted content, offensive content, and/or other types of restricted content in the set of data samples.

In sum, the disclosed techniques attribute generative output produced by a generative model to one or more data samples associated with the generative model. For example, the disclosed techniques could be used to determine the extent to which a content item included in a dataset for the generative model, a set of copyrighted content, a set of offensive content, and/or a set of restricted content contributes to a given sample of generative output produced by the generative model. To perform this attribution, the disclosed techniques compute similarity measures between latent representations of the generative output and latent representations of the data samples. These similarity measures can represent (but are not limited to) similarities in style, content, layout, shapes, colors, textures, contours, dimensions, identity, expression, composition, and/or other characteristics of the generative output and data samples. The absolute and/or relative similarities of the data samples to the generative output can additionally be determined by ranking the data samples by the corresponding similarity measures, applying one or more thresholds to the similarity measures, clustering the data samples by the corresponding similarity measures, and/or otherwise analyzing the similarity measures.

After the similarity measures are computed, the similarity measures are used to generate additional output related to the attribution of the generative output to the corresponding data sample(s). For example, the style, content, layout, identity, expression, composition, and/or other attributes of the generative output could be attributed to a subset of the data samples with similarity measures that exceed one or more thresholds, a subset of data samples with the highest similarity to the generative output, and/or another subset of the data samples based on the corresponding similarity measures. The identified subset of data samples could also be used to assign credit and/or compensation to each data sample in the identified subset of data samples; filter the generative output from subsequent output, publication, and/or distribution; and/or otherwise manage use of the generative output.

One technical advantage of the disclosed techniques relative to the prior art is the ability to determine the extent to which individual data samples in a representative dataset have contributed to various characteristics of a generative output produced by a generative model. Consequently, the disclosed techniques can be used to determine credit, compensation, filters, and/or other types of output associated with attribution of various characteristics of the generative output to individual data samples. Another technical advantage of the disclosed techniques is the ability to evaluate similarities between the generative output and the data samples using latent representations of the generative output and data samples. Accordingly, the disclosed techniques can be used to perform data attribution with less latency and/or resource overhead than conventional approaches that involve retraining and/or fine-tuning one or more generative models and/or other types of machine learning models. These technical advantages provide one or more technological improvements over prior art approaches.
1. In some embodiments, a computer-implemented method for analyzing a generative output of a generative model comprises determining a first latent representation of the generative output and a plurality of latent representations of a plurality of data samples associated with the generative model; computing a plurality of similarities between the first latent representation and the plurality of latent representations; determining that a first similarity that is included in the plurality of similarities and computed between the first latent representation and a second latent representation included in the plurality of latent representations exceeds a threshold; and in response to determining that the first similarity exceeds the threshold, causing output to be generated that indicates a high similarity between the generative output and a first data sample that is included in the plurality of data samples and corresponds to the second latent representation.
2. The computer-implemented method of clause 1, further comprising determining that a second similarity that is included in the plurality of similarities and computed between the first latent representation and a third latent representation does not exceed the threshold; and in response to determining that the second similarity does not exceed the threshold, causing additional output to be generated that indicates a lack of high similarity between the generative output and a second data sample that is included in the plurality of data samples and corresponds to the third latent representation.
3. The computer-implemented method of any of clauses 1-2, wherein determining that the first similarity exceeds the threshold comprises generating a plurality of clusters of the plurality of similarities; and determining that a representative similarity associated with a cluster that includes the first similarity exceeds the threshold.
4. The computer-implemented method of any of clauses 1-3, wherein the representative similarity comprises at least one of an aggregate similarity associated with a subset of the plurality of similarities included in the cluster or a second similarity included in the subset of the plurality of similarities.
5. The computer-implemented method of any of clauses 1-4, wherein computing the plurality of similarities comprises computing the first similarity between a first portion of the first latent representation and a corresponding first portion of the second latent representation; and computing a second similarity between a second portion of the first latent representation and a corresponding second portion of the second latent representation.
6. The computer-implemented method of any of clauses 1-5, wherein the plurality of similarities comprises at least one of a cosine similarity, a Euclidean distance, a style similarity, or a multidimensional similarity.
7. The computer-implemented method of any of clauses 1-6, wherein the plurality of data samples is included in a training dataset for the generative model.
8. The computer-implemented method of any of clauses 1-7, wherein the output comprises at least one of an attribution associated with the first data sample, a compensation associated with the first data sample, or filtering of the generative output.
9. The computer-implemented method of any of clauses 1-8, wherein the first latent representation and the plurality of latent representations are generated using one or more components of the generative model.
10. The computer-implemented method of any of clauses 1-9, wherein the one or more components comprise at least one of an encoder, a U-Net, or an embedding model.
11. In some embodiments, one or more non-transitory computer-readable media store instructions that, when executed by one or more processors, cause the one or more processors to perform the steps of determining a first latent representation of a generative output of a generative model and a plurality of latent representations of a plurality of data samples associated with the generative model; computing a plurality of similarities between the first latent representation and the plurality of latent representations; determining that a first similarity that is included in the plurality of similarities and computed between the first latent representation and a second latent representation included in the plurality of latent representations exceeds a threshold; and in response to determining that the first similarity exceeds the threshold, causing output to be generated that indicates a high similarity between the generative output and a first data sample that is included in the plurality of data samples and corresponds to the second latent representation.
12. The one or more non-transitory computer-readable media of clause 11, wherein the instructions further cause the one or more processors to perform the steps of determining that a second similarity that is included in the plurality of similarities and computed between the first latent representation and a third latent representation does not exceed the threshold; and in response to determining that the second similarity does not exceed the threshold, causing additional output to be generated that indicates a lack of high similarity between the generative output and a second data sample that is included in the plurality of data samples and corresponds to the third latent representation.
13. The one or more non-transitory computer-readable media of any of clauses 11-12, wherein the additional output comprises at least one of a lack of attribution associated with the second data sample or a lack of compensation associated with the second data sample.
14. The one or more non-transitory computer-readable media of any of clauses 11-13, wherein the instructions further cause the one or more processors to perform the steps of determining that a second similarity that is included in the plurality of similarities and computed between the first latent representation and a third latent representation exceeds an additional threshold; and in response to determining that the second similarity exceeds the additional threshold, causing additional output associated with the additional threshold to be generated.
15. The one or more non-transitory computer-readable media of any of clauses 11-14, wherein the additional threshold is associated with at least one of a different attribution than the threshold or a different level of compensation than the threshold.
16. The one or more non-transitory computer-readable media of any of clauses 11-15, wherein the first latent representation is computed based on at least one of the generative output or a prompt associated with the generative model.
17. The one or more non-transitory computer-readable media of any of clauses 11-16, wherein the plurality of data samples is included in a set of restricted content.
18. The one or more non-transitory computer-readable media of any of clauses 11-17, wherein the generative model comprises a diffusion model.
19. The one or more non-transitory computer-readable media of any of clauses 11-18, wherein the first latent representation and the plurality of latent representations are generated using one or more components of a feature extractor model.
20. In some embodiments, a system comprises one or more memories that store instructions, and one or more processors that are coupled to the one or more memories and, when executing the instructions, are configured to perform the steps of generating a latent representation of an output of a machine learning model and a plurality of latent representations of a plurality of data samples associated with the machine learning model; computing a plurality of similarities between the latent representation and the plurality of latent representations; determining that a first similarity that is included in the plurality of similarities and computed between the latent representation and a first data sample included in the plurality of data samples exceeds a threshold; and in response to determining that the first similarity exceeds the threshold, causing additional output indicating a high similarity between the output and the first data sample to be generated.

Any and all combinations of any of the claim elements recited in any of the claims and/or any elements described in this application, in any fashion, fall within the contemplated scope of the present invention and protection.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments.

Aspects of the present embodiments may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "module," a "system," or a "computer." In addition, any hardware and/or software technique, process, function, component, engine, module, or system described in the present disclosure may be implemented as a circuit or set of circuits. Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable gate arrays.

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

## Claims

1. A computer-implemented method for analyzing a generative output of a generative model, the method comprising:
determining a first latent representation of the generative output and a plurality of latent representations of a plurality of data samples associated with the generative model;
computing a plurality of similarities between the first latent representation and the plurality of latent representations;
determining that a first similarity that is included in the plurality of similarities and computed between the first latent representation and a second latent representation included in the plurality of latent representations exceeds a threshold; and
in response to determining that the first similarity exceeds the threshold, causing output to be generated that indicates a high similarity between the generative output and a first data sample that is included in the plurality of data samples and corresponds to the second latent representation.

2. The computer-implemented method of claim 1, further comprising:
determining that a second similarity that is included in the plurality of similarities and computed between the first latent representation and a third latent representation does not exceed the threshold; and
in response to determining that the second similarity does not exceed the threshold, causing additional output to be generated that indicates a lack of high similarity between the generative output and a second data sample that is included in the plurality of data samples and corresponds to the third latent representation.

3. The computer-implemented method of claim 1, wherein determining that the first similarity exceeds the threshold comprises:
generating a plurality of clusters of the plurality of similarities; and
determining that a representative similarity associated with a cluster that includes the first similarity exceeds the threshold.

4. The computer-implemented method of claim 3, wherein the representative similarity comprises at least one of an aggregate similarity associated with a subset of the plurality of similarities included in the cluster or a second similarity included in the subset of the plurality of similarities.

5. The computer-implemented method of claim 1, wherein computing the plurality of similarities comprises:
computing the first similarity between a first portion of the first latent representation and a corresponding first portion of the second latent representation; and
computing a second similarity between a second portion of the first latent representation and a corresponding second portion of the second latent representation.

6. The computer-implemented method of claim 1, wherein the plurality of similarities comprises at least one of a cosine similarity, a Euclidean distance, a style similarity, or a multidimensional similarity.

7. The computer-implemented method of claim 1, wherein the plurality of data samples is included in a training dataset for the generative model.

8. The computer-implemented method of claim 1, wherein the output comprises at least one of an attribution associated with the first data sample, a compensation associated with the first data sample, or filtering of the generative output.

9. The computer-implemented method of claim 1, wherein the first latent representation and the plurality of latent representations are generated using one or more components of the generative model.

10. The computer-implemented method of claim 9, wherein the one or more components comprise at least one of an encoder, a U-Net, or an embedding model.

11. The computer implemented method of claim 2, wherein the additional output comprises at least one of a lack of attribution associated with the second data sample or a lack of compensation associated with the second data sample.

12. The computer implemented method of claim 1, wherein the instructions further cause the one or more processors to perform the steps of:
determining that a second similarity that is included in the plurality of similarities and computed between the first latent representation and a third latent representation exceeds an additional threshold; and
in response to determining that the second similarity exceeds the additional threshold, causing additional output associated with the additional threshold to be generated.

13. The method of any preceding claim, wherein the generative output comprises an image, video, or audio.

14. The method of any preceding claim, wherein the generative output comprises a point cloud, a mesh, sensor data, telemetry data, gene expressions, biological data, or chemical data.

15. One or more non-transitory computer-readable media storing instructions that, when executed by one or more processors, cause the one or more processors to perform the method of any preceding claim.
